# EUROPEAN PATENT APPLICATION

(11) **EP 4 624 107 A1**
(43) Date of publication of application: **01.10.2025**
(21) Application number: 24167357.3
(22) Date of filing: 28.03.2024
(51) Int. Cl.: B25J 9/16

(54) **METHOD OF PLANNING A LONG-TERM TASK FOR A ROBOT**

(71) Applicant: Robert Bosch GmbH, 70442 Stuttgart (DE)
(72) Inventor: Palmieri, Luigi, 70197 Stuttgart (DE); Liu, Yuchen, 71065 Sindelfingen (DE)

(57) **Abstract**

A computer-implemented method of planning a long-term task for a robot, comprising the steps of: Receiving (S21)an environmental representation of the robot comprising a pair of a domain description and a problem instance description. Applying (S22) a Language Model on the environmental representation with a one-shot prompting to decompose a long-term task goal in the problem instance description into a sequence of sub-goals. Applying (S23) an automated task planner to solve the sequence of sub-goals by sub-plans.

## Description

The invention concerns a method for planning a long-term task for a robot utilizing a language model, and a computer program and a machine-readable storage medium, and a system thereof.

### Prior art

With the enormous progress in the research field of Natural Language Processing (NLP), various powerful Large Language Models (LLMs) have been developed and are capable of producing human-like texts or programming code [1]-[4]. Since robots nowadays become important helpers in industrial and household settings [5], LLMs are utilized to help robots in solving robot Task and Motion Planning (TAMP) problems [6]-[12].

While directly using pre-trained LLMs to generate action plans for the robots tends to result in extremely low success rates in generating executable plans and completing the goals [13], a common strategy for using LLMs in robot TAMP is to capture and utilize the collective knowledge embedded in text data to understand the environment in terms of common practices and norms with LLMs, i.e., extracting semantic and common-sense knowledge, to improve the performance of classical automated task planning approaches with respect to plan correctness, executability, and feasibility [6], [7], [9].

Despite the capability of LLMs to interpret the environments and generate reasonable responses, they still struggle with analyzing complex spatial relationships and processing detailed environmental features [14]. Consequently, the LLM's output about the task and motion plan is often not executable for the robots. Therefore, many researchers developed various approaches to ground the environmental topology and actionable knowledge into executable and affordable action plans [6], [10], or ground task specifications into formal planning language, e.g., the problem instances programmed in the Planning Domain Definition Language (PDDL) or Signal Temporal Logic (STL), that can be solved by the off-the-shelf automated planners [8], [12].

However, most of the LLM-based robot TAMP approaches only focus on short-term tasks, e.g., object rearrangement and object goal navigation. Popular examples such as "make a cup of coffee and bring it to my desk" only comprise two sub-tasks "make coffee" and "bring coffee to my desk". Long-term tasks become particularly difficult to solve with the growing problem complexity. The capability of LLMs to handle long-term tasks in large environments is not fully exploited. While decomposing a long-term task into multiple sub-tasks via classical machine learning methods can lead to a significant reduction of planning time [5], completing such jobs with LLMs is still unexplored in the state-of-the-art.
[1] J. Achiam et al., "GPT-4 technical report," arXiv preprint arXiv: 2303.08774, 2023.
[2] A. Chowdhery et al., "Palm: Scaling language modeling with path-ways," Journal of Machine Learning Research, vol. 24, no. 240, pp. 1-113, 2023.
[3] J. Devlin et al., "Bert: Pre-training of deep bidirectional transformers for language understanding," arXiv preprint arXiv:1810.04805, 2018.
[4] H. Touvron et al., "Llama: Open and efficient foundation language models," arXiv preprint arXiv:2302.13971, 2023.
[5] Y. Liu et al., "Human-flow-aware long-term mobile robot task planning based on hierarchical reinforcement learning," IEEE Robotics and Automation Letters, 2023.
[6] W. Huang et al., "Language models as zero-shot planners: Extracting actionable knowledge for embodied agents," in International Conference on Machine Learning. PMLR, 2022, pp. 9118-9147.
[7] C. H. Song et al., "LLM-planner: Few-shot grounded planning for embodied agents with large language models," in Proceedings of the IEEE/CVF International Conference on Computer Vision, 2023, pp. 2998-3009.
[8] B. Liu et al., "LLM+P: Empowering large language models with optimal planning proficiency," arXiv preprint arXiv:2304.11477, 2023.
[9] Y. Ding et al., "Task and motion planning with large language models for object rearrangement," arXiv preprint arXiv:2303.06247, 2023.
[10] M. Ahn et al., "Do as I can, not as I say: Grounding language in robotic affordances," arXiv preprint arXiv:2204.01691, 2022.
[11] K. Rana et al., "Sayplan: Grounding large language models using 3d scene graphs for scalable robot task planning," in Conference on Robot Learning. PMLR, 2023, pp. 23-72.
[12] Y. Chen et al., "AutoTAMP: Autoregressive task and motion planning with llms as translators and checkers," arXiv preprint arXiv:2306.06531, 2023.
[13] K. Valmeekam et al., "Large language models still can't plan (a benchmark for llms on planning and reasoning about change)," arXiv preprint arXiv:2206.10498, 2022.
[14] V. Pallagani et al., "On the prospects of incorporating large language models (LLMs) in automated planning and scheduling (aps)," arXiv preprint arXiv:2401.02500, 2024.

As it emerges from the state of the art, while automated task planning techniques guaranteeing the optimal and executable plans, and LLMs delivering an enormous knowledge base, utilizing LLMs and automated task planning to solve long-term robot task planning problems still remains challenging. Therefore, an objection of the present invention is to provide an approach that fills the aforementioned vacancy for efficient long-term task planning with LLMs.

### Advantages of the invention

The present invention proposes essentially to improve the long-term planning by decomposing the long-term task goals into multiple sub-goals with LLMs. The resulting sub-problems can then be solved autoregressively with an automated task planner.

With the LLM-driven task decomposition strategy and the usage of formal planning language, compared to representative LLM-based approaches, the approach proposed in this invention is able to complete long-term tasks with higher planning success rates, near-optimal plan quality, and significantly shorter planning time (up to 4,000 times faster than the baselines above).

### Disclosure of the invention

In a first aspect of the invention, a method of planning a long-term task for a robot according to claim 1 is proposed. A long-term task can comprise at least 10 or 20 or preferably 30 sub-goals. A short-term task is a task to reach from a starting point (initial state) A a goal (final state) B with preferably less than 10 actions to reach the goal B, wherein a long-term task comprises multiple A to B short-term tasks. The method comprising the steps of: Receiving an environmental representation of the robot comprising a pair of a domain description and a problem instance description. The domain description describes an environment of the robot, and the problem instance description describes a starting state and a long-term task goal of the robot.

This is followed by a step of applying a Language Model on the environmental representation with a one-shot prompting to decompose a long-term task goal in the problem instance description into a sequence of sub-goals.

This is followed by a step applying an automated task planner to solve the sequence of sub-goals by sub-plans. The automated task planner can be a Fast Forward (FF) or Fast Downward (FD) algorithms, that are planners for solving task planning problems formulated in PDDL, and alternatively, Clasp and Clingo could be used that are solvers for solving problems formulated in Answer Set Programming (ASP). This is followed by a step concatenating of sub-plans which have been autoregressively determined, wherein the concatenation of the sub-plans can be understood as an action sequence of the robot. The generation of sub-plans in an autoregressive way can be understood that the final state of the previous sub-problem becomes the initial state of the next sub-problem. The sub-plan can be understood in a broad way, preferably the sub-plans are symbolic and generated by the automated task planner, thus, a sub-plan can also be referred to as an action or as a (short) sequence of actions. The trajectory can be numerically and either derived according to the concatenating of sub-plans or determined by a motion planner according to the concatenating of sub-plans.

It is proposed that the Language Model is a Large Language Model. A language model is a statistical model in the field of machine learning that is configured to predict and generate sequences of words or characters in a natural language. It can be trained on a large corpus of text data to learn the patterns, relationships, and probabilities of word sequences. By analyzing the context and previous words in a sequence, a language model can estimate the likelihood of different words or characters occurring next. This enables the model to generate coherent and contextually appropriate text, making it useful for tasks such as speech recognition, machine translation, text generation, and natural language understanding. Language models can range from simple n-gram models to more advanced models like recurrent neural networks (RNNs) and transformer models. A large language model refers to a language model that comprises significantly more parameters as the language model. The term "large" in this context refers to the size of complexity of the model architecture. Preferably, a large language model comprises at least 10 million, or 100 million or 1 billion parameters or more.

Embodiments of the invention will be discussed with reference to the following figures in more detail. The figures show:
- Figure 1: an overview of the system architecture, the upper part refers to the long-term goal decomposition with LLM, and the lower part refers to the autoregressive sub-task planning;
- Figure 2: Algorithm of autoregressive sub-task planning;
- Figure 3: a schematic flow diagram of an embodiment of the invention.

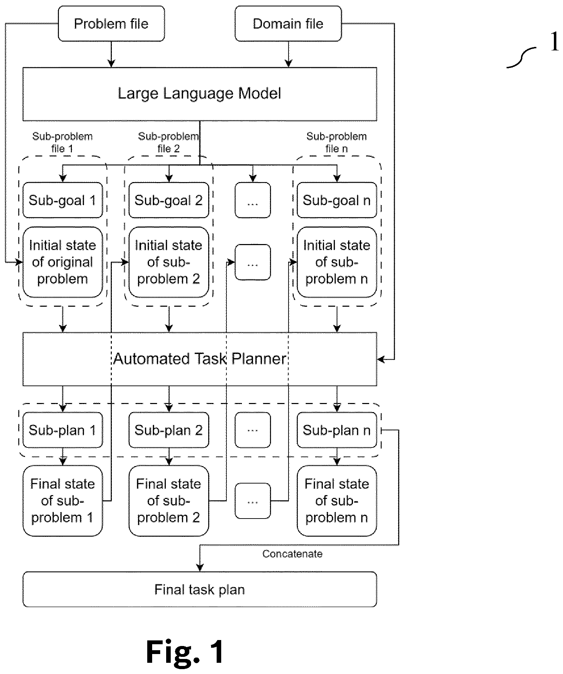

This invention focuses on high-level task planning, which is mainly integrated in the planning level of the complete autonomous system. An illustration of the hierarchy of a typical autonomous system is shown in Figure 1. The information from the perception pipeline can be seen as the detected static and dynamic objects in the environment. The prediction pipeline fulfills the environmental representation and reasons about the relations between the objects and their future behaviors.

The environmental representation is provided as input to the task planning pipeline, it then outputs a high-level action plan to the motion planner for computing a motion trajectory for the robot. The control pipeline invokes the corresponding executors (e.g., arms, wheels etc.) to follow the trajectory.

For instance, this invention can be applied in an indoor household environment to perform household tasks, e.g., a robot should clean up a room by first disposing of the rubbish, then mopping the floor, and finally cleaning the mop.

A task planning problem π is a tuple <*O*, *P*, *A, T, C*, *I, G*>. O is the set of all ground objects in the problem. P is a set of properties, each defined over one or more objects (predicates are subclasses of properties in that they are Boolean-valued). *A* is a finite set of lifted actions operating over object tuples. *T* is a transition model and *C* denotes state transition cost. *I* and *G* are initial and goal states. *A* state is an assignment of values to all possible properties grounded over objects.

A Language Model (LM) learns a distribution over sequences of word tokens. A common approach is to model the conditional distribution p(wk|w1:k) over wk, the next token at the k-th position, given a sequence of previous input tokens w1 :k. Many recent studies on LMs are based on the Transformer model, they greatly scale up the size of LMs, and result in Large LMs (LLMs), where they usually have tens or hundreds of billions of parameters and are capable of generating human-like text or programming code.

A formal planning language such as PDDL can formulate the necessary knowledge of a planning problem as programming code, such that an off-the-shelf automated task planner can interpret and solve the problem. Typically, an automated task planner requires two input files: the domain description file and the problem instance file. The domain file defines the general aspects of the planning problem. It can specify the actions that can be taken, and preferably along with their preconditions (conditions that must be fulfilled before an action can be executed), optionally it can define effects (changes that occur after an action is executed), and any constraints or limitations on the actions. Essentially, it can outline the rules and structure of the planning problem without specifying the specific instance of the problem. The problem file, on the other hand, provides the specific details for a particular planning instance within the defined domain. It can include the information about the initial world state (i.e., the starting conditions), the goal state(s) to be achieved, and preferably any additional constraints or requirements unique to that problem instance. This file essentially defines the particular scenario or situation that needs to be planned for within the given domain.

In general, the invention focuses on solving long-term mobile robot task planning problems with LLMs. Given a pair of domain description and problem instance files defined in formal planning language (e.g., PDDL), the LLM will be used to decompose the long-term task goal in the problem instance file into a sequence of sub-goals for generating corresponding sub-problems autoregressively, such that an automated task planner can solve.

In other words, the invention focuses on solving long-term robot task planning problems with LLMs. In a preferred embodiment, a mobile robot is considered that moves in household environments and performs different long-term tasks. Given a 3D scene graph defined in programming code as environment representation and natural language descriptions of domain and problem specifications, the LLM can generate the necessary PDDL planning files, and decompose the long-term task goal in the problem instances into a sequence of sub-goals for generating corresponding sub-problems autoregressively, such that an automated task planner can solve it.

Preferably, in order to distinguish the *object* keyword in PDDL from objects in the environments, in the following, we refer to the environmental objects as *items.* Additionally, we define *agent* as an object type in the domain file and *robot* as an instance of *agent* in the problem file.

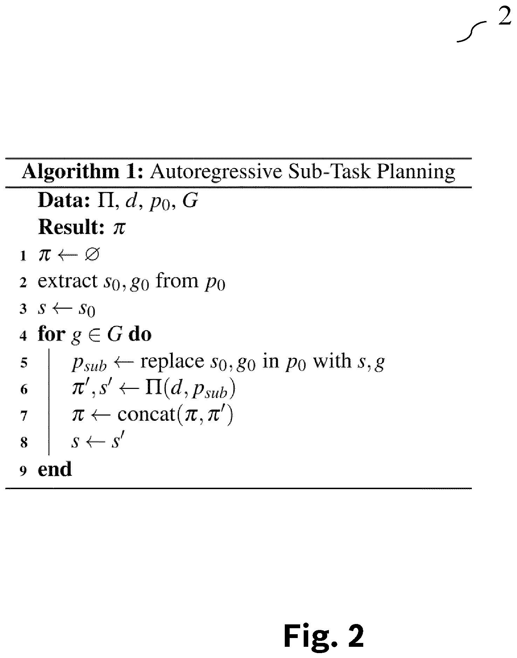

The proposed approach in this invention consists of two steps, i.e., long-term goal decomposition, and autoregressive sub-task planning. Figure 1 shows an illustration of the system architecture, where the upper part refers to the long-term goal decomposition, and the lower part refers to the autoregressive sub-task planning.
i. **Goal Decomposition:** To improve the computational efficiency and reduce the complexity of the planning problem, the long-term goal defined in the problem file will be decomposed into a sequence of sub-goals. In this step, the LLM takes a natural language (NL) prompt as input, which consists of three main components, i.e., the role of the LLM, the example (for one-shot prompting), and the instruction:
   1) **Role:** The LLM is assigned a role as an excellent assistant in decomposing long-term goals. Given a pair of domain file and problem file defined in formal planning language, the LLM can decompose the long-term goal from the problem file into a sequence of sub-goals.
   2) **Example:** For helping the LLM to better understand the context, the LLM is provided with an example of how a similar problem is tackled, which serves as *"one-shot prompting".* Here, a pair of example domain and problem files are given, where the domain file contains the executable actions, and the problem file contains the original (i.e., undecomposed) goal. For instance, the goal in the problem file is formulated in PDDL as follows: 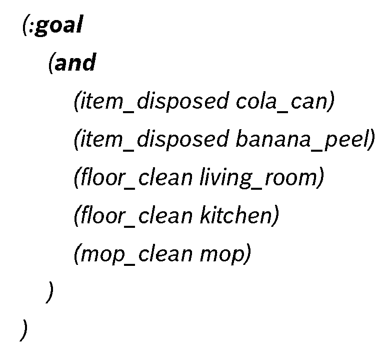 which implies "dispose of all possible rubbish in the environment and clean the floor in the kitchen and living room, the mop should be clean in the end". One of the relevant action "mop floor" in the domain file is defines in PDDL as follows: 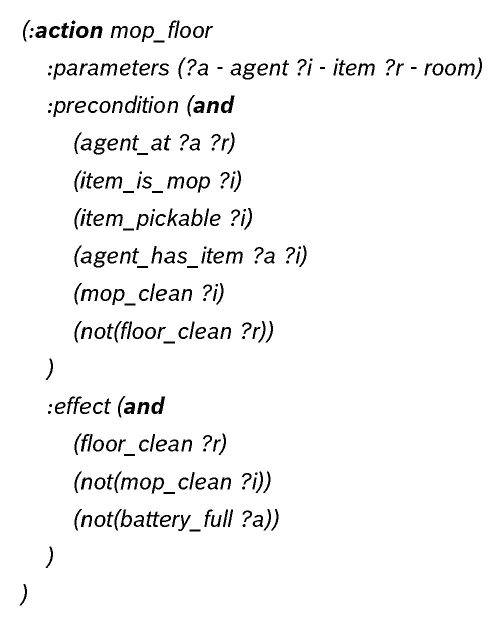 The action requires mop_clean in previous, and results in not (mop_clean), which infers that one cannot mop the floor in another room continuously since the mop turns dirty after mopping the previous room. Thus, cleaning the mop before mopping the next room should be considered when decomposing the goal. Knowing the context, the goal example above can be decomposed into the following (NL) sub-goals:
      a) Dispose cola can
      b) Dispose banana peel
      c) Mop floor in kitchen
      d) Clean mop in sink_1
      e) Mop floor in living room
      f) Clean mop in sink_2
      Each sub-goal can then be formulated as formal planning language (e.g., PDDL) as follows:
      a) *(:goal (item_disposed cola_can))*
      *b) (:goal (item_disposed banana_peel))*
      *c) (:goal (floor_clean living_room))*
      *d) (:goal (mop_clean mop))*
      *e) (:goal (floor_clean kitchen))*
      *f) (:goal (mop_clean mop))*
   3) **Instruction:** Here, the LLM is queried with a new pair of domain and problem files of a new planning problem to be solved. The LLM should comprehend the action knowledge in the domain file and use it to decompose the long-term goal in the problem file into a sequence of sub-goals encoded in the same formal planning language.
ii. After having the sequence of sub-goals, one can query an automated task planner to solve the corresponding sub-problems individually, also referred to as Autoregressive Sub-Task Planning. Figure 2 illustrates the algorithm that shows how the sub-problems are generated and solved autoregressively.

The algorithm takes the automated task planner *Π* and the original domain file d and problem file *p*₀, and the sequence of sub-goals G (generated by the LLM from the previous step) as inputs. Note that *d, p₀,* and G are all formulated in formal planning language. The initial state *s₁* of the first sub-problem *p_{sub}* is identical to the initial state so from the original problem *p₀*, thus, the first sub-problem file *p_{sub}* can be simply formulated by replacing the goal *g₀* from the original problem *p₀* with the first sub-goal *g₁* from the sequence G. In fact, the final state resulting from the plan's execution of each solvable sub-problem is exactly the initial state of the next sub-problem. Therefore, as shown in the for-loop in L. 4-9, after solving each sub-problem *p* with the planner *Π* and the domain file d, we obtain a sub-plan *π*' and the final state s' (L. 6). *s*'will then be assigned to s for the next sub-problem. The following sub-problems can be formulated by replacing the initial state and goal (L. 5) and solved in the same way autoregressively until the last sub-problem is solved. The final task plan *π* can be obtained by concatenating all sub-plans (L. 7). The task plans only consist of executable (symbolic) actions.

The above-described approach can be expanded by adding pre-processing steps. In total, the approach consists then of e.g. five steps, i.e., domain generation, scene graph pruning, problem generation, long-term goal decomposition, and autoregressive sub-task planning.

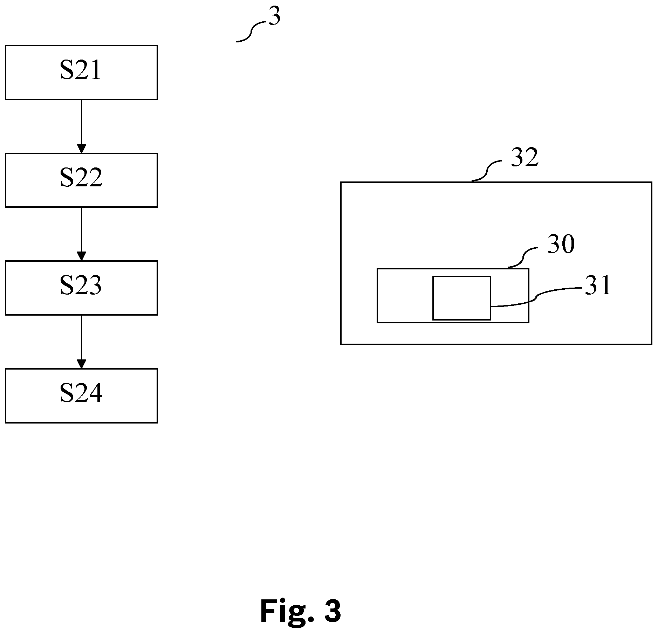

Figure 3 shows a flow chart of a method for planning a long-term task for a robot.

The method begins by receiving a domain knowledge and an environmental representation of the robot, which comprises a domain description and a problem instance description (S21). The domain description provides information about the environment in which the robot operates, while the problem instance description includes details about the starting state and the long-term task goal of the robot. The domain description can refer to the (general) domain knowledge of a planning problem, such as the necessary object types and the executable actions of a robot etc. The problem instance can be a part of the environment representation.

Next, a Language Model (LM) is applied to the environmental representation using a one-shot prompting technique (S22). The LM is designed to analyze and understand the information provided in the environmental representation. It decomposes the long-term task goal mentioned in the problem instance description into a sequence of sub-goals. This decomposition helps break down the complex task into smaller, more manageable sub-goals.

Once the sub-goals are identified, the corresponding sub-problems can be generated according to Algorithm 1, e.g. an automated task planner is applied to solve the sequence of sub-problems by generating sub-plans (S23). The task planner utilizes algorithms and planning techniques to determine the optimal sequence of actions required to achieve each sub-goal. By solving the sub-problems individually, the task planner ensures that the overall long-term task goal can be accomplished.

Finally, the sub-plans autoregressively generated by the task planner are concatenated to form an action sequence for the robot (S24). This concatenation process ensures that the sub-plans are executed in a sequential manner, allowing the robot to navigate through the environment and accomplish the long-term task goal. The trajectory represents the planned path and actions that the robot needs to follow to successfully complete the task.

The method described above can be applied to various scenarios, including autonomous driving cars, intralogistics robots, home cleaning robots, and robotic lawn mowers. Here's how the method can be utilized in each of these contexts:
1. Autonomous Driving Cars:
   - Environmental Representation: The domain description in this case would describe traffic rules, and other relevant information about the driving environment. The problem instance description would include the current state of the car and the desired destination.
   - Language Model and Sub-Goals: The Language Model would analyze the problem instance description and decompose the long-term task goal (reaching the destination) into a sequence of sub-goals, such as lane changes, turns, and merging.
   - Automated Task Planner: The task planner would generate sub-plans for each sub-goal, determining maneuvers or other high-level and symbolic actions.
   - Concatenation of the sub-plans: The sub-plans would be concatenated to form a trajectory that guides the car through the planned sequence of actions, e.g. ensuring safe and efficient navigation towards the destination.
2. Intralogistics Robots:
   - Environmental Representation: The domain description would define the executable actions of the robot. The problem instance description would specify the initial state and the long-term task goal, such as picking and delivering items and preferably, a layout of the warehouse or facility where the robot operates, including the locations of shelves, storage areas, and obstacles.
   - Language Model and Sub-Goals: The Language Model would decompose the long-term task goal into sub-goals, such as locating the target item, grasping it, and navigating to the delivery location.
   - Automated Task Planner: The task planner would generate sub-plans for each sub-goal, determining the optimal action sequence, picking strategy, and navigation instructions to accomplish them.
   - Concatenation of the sub-plans: The sub-plans would be concatenated to form a trajectory that guides the robot through the facility, ensuring efficient item retrieval and delivery.
3. Home Cleaning Robots:
   - Environmental Representation: The domain description would describe the executable actions of the robot.. The problem instance description would specify the initial state and the long-term task goal, such as cleaning all the rooms and preferably, a layout of the home, including rooms, furniture, and obstacles.
   - Language Model and Sub-Goals: The Language Model would decompose the long-term task goal into sub-goals, such as navigating to each room, identifying dirty areas, and performing cleaning actions.
   - Automated Task Planner: The task planner would generate sub-plans for each sub-goal, determining the optimal action sequence, cleaning strategy, and actions required to accomplish them.
   - Concatenation of the sub-plans: The sub-plans would be concatenated to form a trajectory that guides the robot through the home, ensuring thorough cleaning of all the rooms.
4. Robotic Lawn Mower:
   - Environmental Representation: The problem instance description would specify the initial state and the long-term task goal, such as mowing the entire lawn and preferably, a lawn area, including its boundaries, obstacles, and zones.
   - Language Model and Sub-Goals: The Language Model would decompose the long-term task goal into sub-goals, such as navigating to different zones, avoiding obstacles, and mowing the grass in each zone.
   - Automated Task Planner: The task planner would generate sub-plans for each sub-goal, determining the optimal action sequence, mowing pattern, and obstacle avoidance strategy to accomplish them.
   - Concatenation of the sub-plans: The sub-plans would be concatenated to form a trajectory that guides the robotic lawn mower through the lawn, ensuring complete coverage and efficient mowing.

In each of these applications, the method enables the robots to plan and execute long-term tasks autonomously by decomposing them into manageable sub-goals, generating sub-plans, and concatenating them into an action sequence. This approach enhances the efficiency, safety, and effectiveness of the robots in their respective domains.

Furthermore, Fig. 3 shows a machine-readable storage medium (31) on which a computer program stored. The computer program is configured to cause a computer to carry out the method according to the method of Fig. 3 with all of its steps if the computer program is carried out by a processor (30). System (32) is also configured to carry out the method according to Fig.3.

## Claims

1. A computer-implemented method (3) of planning a long-term task for a robot, comprising the steps of:
Receiving (S21) an environmental representation of the robot comprising a pair of a domain description and a problem instance description,
wherein the domain description describes an environment of the robot and the problem instance description describes a starting state and a long-term task goal of the robot;
Applying (S22) a Language Model on the environmental representation with a one-shot prompting to decompose a long-term task goal in the problem instance description into a sequence of sub-problems;
Applying (S23) an automated task planner to solve autoregressively the sequence of sub- problems by sub-plans; and
Concatenating (S24) the sub-plans to a trajectory of the robot.

2. The method according to claim 1, wherein the domain description and the problem instance description are given in a formal planning language, in particular as PDDL.

3. The method according to claim 2, wherein the Language Model generates the sub-goals in PDDL, wherein the automated task planner utilizes the generated PDDL sub-goals to solve the sub-problems.

4. The method according to any one of claims 1 to 3, further comprising a step of executing the trajectory by the robot to accomplish the long-term task goal.

5. The method according to anyone claims 1 to 4, wherein the Language Model is a Large Language Model.

6. Computer program that is configured to cause a computer to carry out the method according to any one of claims 1 to 5 with all of its steps if the computer program is carried out by a processor (30).

7. Machine-readable storage medium (31) on which the computer program according to claim 6 is stored.

8. System (32) that is configured to carry out the method according to any one of claims 8 to 5.
